# EUROPEAN PATENT SPECIFICATION

(11) **EP 2 462 788 B1**
(45) Date of publication and mention of the grant of the patent: **15.05.2019**
(21) Application number: 09848136.9
(22) Date of filing: 30.11.2009
(51) Int. Cl.: H05K 1/00, B32B 7/12, B32B 27/08, B32B 27/32, B32B 27/28, B32B 27/30, B32B 27/36

(54) **ASSEMBLY AND METHOD FOR ILLUMINATING THROUGH A CIRCUIT BOARD**
ANORDNUNG UND VERRFAHREN ZUR BELEUCHTUNG ÜBER EINE PLATINE
ENSEMBLE ET PROCÉDÉ D'ÉCLAIRAGE À TRAVERS UNE CARTE IMPRIMÉE

(30) Priority: 07.08.2009 US 200961232263 P
(43) Date of publication of application: 13.06.2012
(73) Proprietor: Methode Electronics, Inc., Chicago, IL 60706 (US)
(72) Inventor: BOELSTLER, Richard A., Lake Orion Michigan 48359 (US); HODGMAN, Daniel W., Royal Oak Michigan 48073 (US); BAYDOUN, Habib I., Dearborn Heights Michigan 48127 (US); CARTER, Eluid David, Southfield Michigan 48034 (US); WILLIAMS, Timothy S., Holly Michigan 48442 (US)
(74) Representative: Fry, David John
(86) International application number: PCT/US2009/066149
(87) International publication number: WO 2011/016817

(56) References cited:
- EP-A2- 1 420 383
- EP-A2- 1 944 552
- WO-A2-2004/088395
- US-A1- 2005 157 465
- US-A1- 2008 120 834
- US-A1- 2008 124 528

## Description

### Reference to Related Application

The present application claims the benefit of U.S. Provisional Patent Application No. 61/232,263, filed August 7, 2009.

### Field of the Invention

The present invention relates to illuminating through a circuit board. In particular, the present invention relates to an assembly and a method for illuminating through a circuit board so that the light from the light source substantially maintains its color and intensity.

### Background of the Invention

Known circuit boards are made from dielectric materials that are opaque. For example, many circuit boards are made from dielectric materials, such as Flame Retardant 4 or FR4, which is formed from woven glass and epoxy, or some other epoxy-based material. Such dielectric materials are usually green or yellow, and the green or yellow coloring is inconsistent. Thus, when these dielectric materials are backlit or illuminated such that light has to travel through the dielectric material, the light traveling through the dielectric material changes color or loses its intensity. That is, the dielectric material filters the light that travels through it. Therefore, the light source that provides the light that travels through the dielectric material must emit a light with a color that compensates for the filtering or emit a light with a stronger intensity. However, a light source that emits a light with stronger intensity consumes more power and produces more heat.

Thus, a dielectric material that compensates for the filtering of light is needed. However, known dielectric material that compensate for the filtering of light, such as polyester flex circuits, are not compatible with lead free solders or two-sided traces. Also, polyester flex circuits cannot withstand the heat required for lead free solders. Lead-free solder is needed for certain circuit elements or components, for example, those associated with capacitive or field effect circuits and sensors. Thus, known dielectric material cannot be used with such circuit elements or components.

Also, known dielectric materials do not adhere well to another surface. In some applications, printed circuit boards are mated to another surface for mounting or mechanical support. If the other surface has an irregular shape or a non-planar contour, the known printed circuit board does not have the flexibility to conform to the irregular shape or the non-planar contour. Furthermore, pressure sensitive tape and adhesives are used to mate the printed circuit board to another surface. However, pressure sensitive tape and adhesives are prone to forming air gaps between the printed circuit board and the other surface, thereby forming thick, unreliable, and non-uniform bonding between printed circuit boards and their mating surfaces. Also, for devices using capacitive or field effect circuits and sensors, air gaps impair their performance. Furthermore, pressure sensitive tape and adhesives change the color or intensity of light passing through them.

Thus, there is a need for a dielectric material that can be backlit such that the light traveling through the dielectric material does not substantially change color or lose its intensity. If the dielectric material is mated to another surface, the mating should be thin, reliable, uniform, and allow light to pass without substantially changing its color or intensity. Also, the same dielectric material should be compatible with lead free solder and two-sided traces. Furthermore, the dielectric material should be flexible so that it can conform to the contours of another surface.

EP1944552 discloses a cook top control pad with alphanumeric displays integrated therewith. WO2004/088395 discloses an electro-optic display with first and second substrates and an adhesive layer. EP1420383 discloses a printed circuit board with display element.

### Summary of the Invention

Accordingly, an aspect of the invention provides an assembly according to claim 1 that includes a substrate, a flexible layer, and an adhesive mating the substrate and the flexible layer. The substrate has a first surface and a second surface opposite the first surface. The flexible layer has a first surface and a second surface opposite the first surface. The flexible layer has a thickness such that light passes through the flexible layer without substantial change to a color or an intensity of the light and such that the flexible layer substantially conforms to a shape of the substrate. The adhesive mates the second surface of the substrate and the first surface of the flexible layer and has a viscosity that substantially fills in a texture of at least one of the second surface of the substrate and the first surface of the flexible layer. The adhesive also forms substantially no air gaps.

Other aspects of the invention are defined in the dependent claims 2-7.

Yet another aspect of the invention provides a method according to claim 8 of manufacturing an assembly. The method includes the steps of: providing a substrate with a first surface and a second surface opposite the first surface; providing a flexible layer with a first surface and a second surface opposite the first surface; placing an adhesive on at least one of the second surface of the substrate and the first surface of the flexible layer; filling in a texture of at least one of the second surface of the substrate and the first surface of the flexible layer with the adhesive; and pressing together the substrate, the adhesive, and the flexible layer. The substrate allows some portion of light to pass through the first surface and the second surface. The flexible layer allows some portion of light to pass through the first surface and the second surface.

Other objects, advantages and salient features of the invention will become apparent from the following detailed description, which, taken in conjunction with the annexed drawings, discloses exemplary embodiments of the present invention.

### Brief Description of the Drawings

A more complete appreciation of the invention and many of the attendant advantages thereof will be readily obtained as the same becomes better understood by reference to the following detailed description when considered in connection with the accompanying drawings, wherein:
FIG. 1 is a front elevational view of an assembly according to an exemplary embodiment of the present invention;
FIG. 2 is a cross-sectional view of the assembly illustrated in FIG. 1 along line 2- 2;
FIG. 3 is a side elevational view of an apparatus for manufacturing the assembly illustrated in FIG. 1;
FIG. 4 is a side elevational view of the apparatus illustrated in FIG. 3 with an upper die set and a lower die set closed; and
FIG. 5 is a flowchart showing steps in the manufacture of the assembly illustrated in FIG. 1;

### Detailed Description of the Invention

The present invention provides an apparatus and a method for illuminating a circuit board such that the light traveling through the circuit board does not substantially change color or lose its intensity. Also, the apparatus and method may be used with lead free solder and two-sided traces.

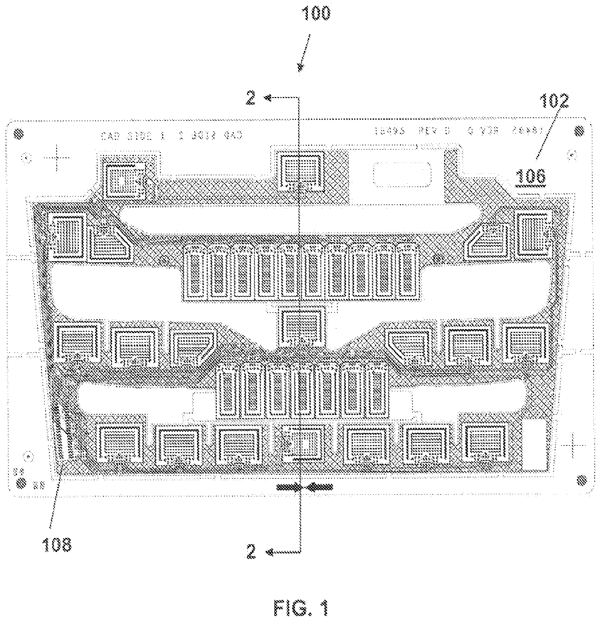

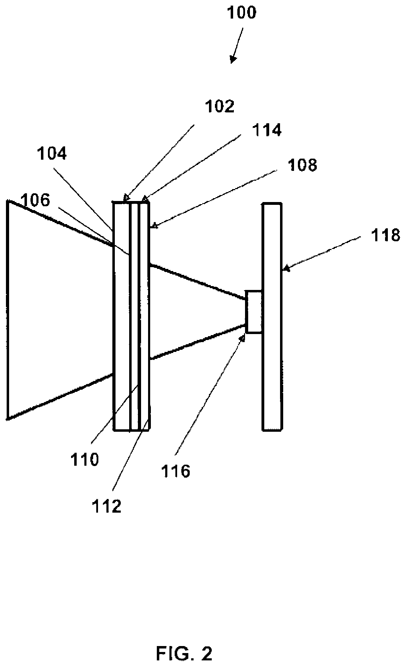

Turning to FIGS. 1 and 2, an assembly 100 is shown. The assembly 100 includes a substrate 102 with a first surface 104 and a second surface 106 opposite the first surface 104, a flexible layer 108 with a first surface 110 and a second surface 112 opposite the first surface 110, and an adhesive 114 between the substrate 102 and the flexible layer 108. In the embodiment shown, the assembly 100 is illuminated by a light source 116. The depicted light source 116 is mounted to an illumination printed circuit board 118. However, in other embodiments, the light source 116 need not be mounted to an illumination printed circuit board 118. Also, the light source 116 can be an incandescent bulb, fluorescent bulb, light emitting diode, combinations of the aforementioned, or any other device that provides light or illumination.

For the sake of simplifying the description, the invention is described in reference to an embodiment where the assembly 100 provides a substrate 102 with which a user interacts. The user interactions on the first surface 104 of the substrate 102 actuate one or more capacitive or field effect devices disposed on the flexible layer 108 adjacent to the substrate 102. The first surface 104 of the substrate 102 can include indicia such as words, diagrams, pictures, signs, and other indicators that can be imprinted, printed, etched, sculpted, painted, adhered, or other mated to the first surface 104. The user touches the first surface 104 near one or more of the capacitive or field effect devices, and the touch on the first surface 104 actuates the one or more capacitive or field effect devices disposed on the flexible layer 108. Such an assembly 100 can be used, for example, in an automobile to control or manipulate one or more functions of a system of the automobile. For example, the first surface 104 of the substrate 102 can have indicia for temperature control and the flexible layer 108 can have a capacitive device associated with the indicia for temperature control. The light source 116 can emit light through the substrate 102 and the flexible layer 108 and thus illuminate the indicia for temperature control on the first surface 104 of the substrate 102 and the associated capacitive device on the flexible layer 108 such that the user can visually perceive the indicia and the associated capacitive device. Thus, when the user touches the first surface 104 near the indicia for temperature control, the associated capacitive device on the flexible layer 108 is actuated and sends a signal that changes the temperature setting of an air conditioning system or heating system. However, the invention is not limited to such an embodiment and can be applied to any assembly 100 that requires a substantially transparent or translucent flexible layer 108 coupled to a substrate 102.

The substrate 102 can provide mechanical support, an interface for a user, a surface 104 for decorative features, combinations of the aforementioned, or some other similar function. Although the substrate 102 is shown as being a generally flat board, the substrate 102 can have an irregular shape or contour. The second surface 106 of the substrate may be mated to the flexible layer 108. The substrate 102 can be made from plastic, thermoset, thermoset polyethylene, thermoplastic such as acrylic or acrylonitrile butadiene styrene, thermoplastic polymer such as polycarbonate, thermoplastic fluoropolymer, fluorocarbon-based polymer, polyethylene, polyvinyl chlorides, polyvinylidene fluoride, ethylene tetrafluoroethylene, silicone, glass, combinations of the aforementioned, or any other rigid material that is substantially transparent, translucent, or allows some portion of light to pass. In the embodiment shown, the substrate 102 is made from polycarbonate and acrylonitrile butadiene styrene (ABS).

The flexible layer 108 provides a surface 110 or 112 for mounting components. The flexible layer 108 is flexible so that it can substantially match the shape and contour of the substrate 102. The flexible layer 108 is also substantially transparent, translucent, or white to allow at least a portion of light to travel through it with substantially no change in the color or intensity of the light. In the embodiment shown, components are mounted on the surface 110 or 112 to form one or more circuits. The components can be surface mount resistors, application specific integrated circuits, capacitors, connectors, traces, or some other component that provides a pathway for an electrical signal or manipulates an electrical signal. The flexible layer 108 can be made from a polytetrafluoroethylene (PTFE) film, plastic, thermoset, thermoset polyethylene, thermoplastic such as acrylic or acrylonitrile butadiene styrene, thermoplastic polymer such as polycarbonate, thermoplastic fluoropolymer, fluorocarbon-based polymer, polyethylene, polyvinyl chlorides, polyvinylidene fluoride, ethylene tetrafluoroethylene, silicone, constructs containing glass or glass fibers, combinations of the aforementioned, or any other rigid material that is substantially transparent or translucent and flexible enough to conform to the shape and contours of the substrate. In the embodiment shown, the flexible layer 108 is made from thin, flexible FR408 with substantially no ultraviolet inhibitors or doping. FR408 is made from resin-reinforced glass fibers and is commercially available from Isola Global. Also, a flexible layer 108 with a thickness of approximately 0.08 mm provides optimal characteristics for light transmission and flexibility for matching the contours of the substrate 102.

The adhesive 114 couples the substrate 102 and the flexible layer 108. The adhesive 114 can be substantially transparent, translucent, or allow some portion of light to pass so that, when the adhesive 114 is used to mate the substrate 102 and the flexible layer 104, the adhesive 114 allows at least some portion of light to pass without substantially changing the color or intensity of the light. Furthermore, the adhesive 114 can form a thin mating that is more reliable and more uniform than a mating formed from pressure sensitive tape and adhesives. The adhesive 114 can be a solvent-free plastic adhesive (such as acrylated urethane commercially available as DYMAX 3069), a solvent-free glob top chip encapsulant (such as modified urethane commercially available as the DYMAX 9001 series of adhesives), modified acrylate (such as those commercially available as the LOCTITE 3492 series of adhesives or the LOCTITE 3493 series of adhesives), modified acrylic (such as those commercially available as the LOCTITE 3494 series of adhesives), or any other appropriate adhesive that cures substantially transparent or translucent. The adhesive 114 can be an ultraviolet light (UV) or natural light curable adhesive. In an embodiment using UV light curable adhesive, the flexible layer 108 has substantially no UV blocking agent so that UV light can substantially pass through the flexible layer 108 to cause curing of the UV light curable adhesive. In the embodiment shown, the adhesive is a UV or natural light curable adhesive, such as DYMAX 3069, and the flexible layer 108 is made from FR408 with substantially no UV blocking agent. In other embodiments, the adhesive 1 14 can be a heat curable adhesive such as thermoplastic or chemical reaction curable adhesive such as polyvinyl acetate, epoxy, polyurethane, cyanoacrylate polymers, polychloroprene, acrylate based polymers, a resin and its corresponding accelerant, and similar adhesives.

Before curing, the adhesive 114 can be disposed on either the second surface 106 of the substrate or the first surface 110 of the flexible layer 108 as a thin, uniform coating. Also, when the adhesive 114 is made from UV or natural light curable adhesive, it substantially prevents formation of air gaps between the substrate 102 and the flexible layer 108. Thus, when a capacitive or field effect circuit, device, or sensor is placed on the flexible layer 108, air gaps do not substantially impair the performance of the capacitive or field effect circuit, device, or sensor.

In addition, in the embodiment where the adhesive 114 is a UV or natural light curable adhesive, the adhesive 114 can aid in making the substrate 102 or the flexible layer 108 more transparent, more translucent, or allow at least some portion of light to pass more readily. If the adhesive 114 has a viscosity so that it allows the adhesive 114 to fill in the texture of the surface 104, 106, 110, or 112, then the adhesive 114 can make the substrate 102 or the flexible layer 108 more transparent, more translucent, or allow some portion of light to pass more readily. Such an adhesive 114 acts as a wetting agent and allows more light to pass through the substrate 102 or the flexible layer 108.

The flexible layer 108 may be connected to the illumination printed circuit board 118 by an electrical pathway. In the embodiment shown, a flat flexible cable (FFC) connector connects the flexible layer 108 and the illumination circuit board 118. In other embodiments, the flexible layer 108 and the illumination circuit board 118 can be connected by a trace, a wire, a cable, a coaxial cable, a wireless transmission path, combinations of the aforementioned, or any other pathway for signals between two components.

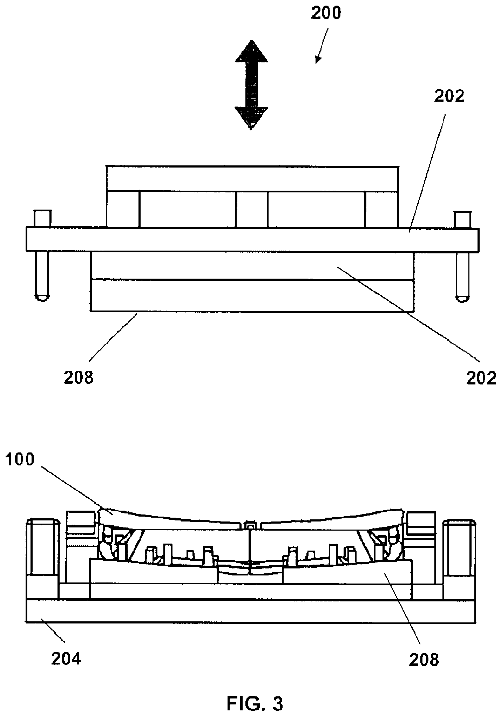

Referring to FIGS. 3-4, an apparatus 200 for manufacturing the assembly 100 is shown. Turning to FIG. 3, the apparatus 200 includes an upper die set 202 and a lower die set 204. The terms "upper" and "lower" are not meant to be limiting but are used to describe the relative positions of the components within the apparatus 200. For example, in another embodiment, the die sets 202 and 204 may be oriented laterally so that the die sets 202, 204 are to the right or left of each other or some other orientation. The upper die set 202 can be moved towards or away from the lower die set 204 as indicated by the arrows in the figure. In FIG. 3, the upper die set 202 and the lower die set 204 are apart from each other.

The upper die set 202 includes a curing light source 206 and a pressure pad 208. The curing light source 206 emits a light that causes curing of the adhesive 114. The curing light source 206 can be one or more light emitting diodes, metal halide bulbs, or the like. The pressure pad 208 presses together the substrate 102 and the flexible layer 108 so that the flexible layer 108 conforms to the irregular shape or contours of the substrate 102. The substrate 102 and the flexible layer 108 may be disposed in the lower die set 204, and the pressure pad 208 provides substantially uniform pressure to press together the substrate 102 and the flexible layer 108 when the upper die set 202 is pressed towards the lower die set 204. In the embodiment shown, the pressure pad 208 is between the curing light source 206 and lower die set 204. Also, the curing light source 206 emits light of approximately 6 mW/cm² and approximately 365 nm to cure the UV light curable adhesive. The depicted pressure pad 208 is a substantially continuous surface. In other embodiments, the pressure pad 208 can formed from a lattice structure or a surface that is not continuous. However, a pressure pad 208 formed from a lattice structure is less efficient and forms a less reliable mating of the substrate 102 and the flexible layer 108. A lattice structure pressure pad 208 causes a "doming" effect in the adhesive 114 between the substrate 102 and the flexible layer 108, and the "doming" effect produces an adhesive 114 with an inconsistent thickness. In an embodiment where the adhesive 114 is a heat curable or chemical reaction curable adhesive, the curing light source 206 is replaced with a heat source.

The lower die cast 204 includes a nest 210. The nest 210 receives the substrate 102, the adhesive 1 14, and the flexible layer 108. The adhesive 114 is placed between the substrate 102 and the flexible layer 108 so that when the upper die set 202 is pressed towards the lower die set 204, the adhesive 114 is pressed between the substrate 102 and the flexible layer 108 so that the substrate 102 and the flexible layer 108 are mated. The nest 210 is shaped to conform to the first surface 104 of the substrate 102.

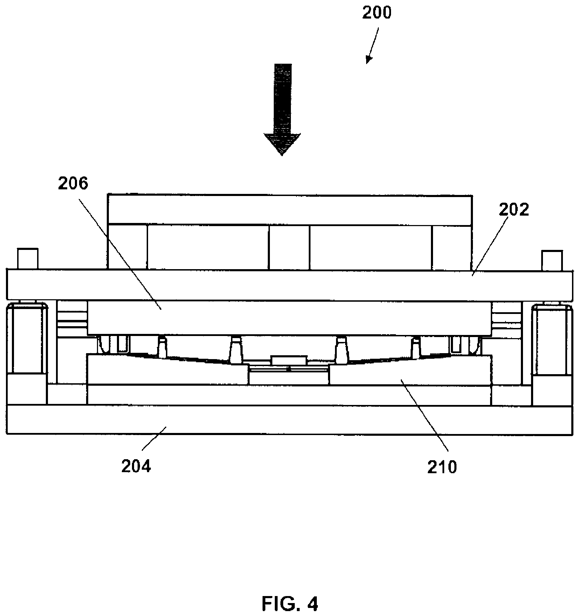

Turning to FIG. 4, after the substrate 102, the adhesive 114, and the flexible layer 108 are placed in the nest 210 of the lower die set 204, the upper die set 202 is pressed towards the lower die set 204. When the upper die set 202 is pressed toward the lower die set 204, the substrate 102, the adhesive 1 14, and the flexible layer 108 are pressed together between the pressure pad 208 and the nest 210. The pressure pad 208 presses together the substrate 102, the adhesive 114, and the flexible layer 108 to ensure that flexible layer 108 substantially conforms to the shape and contour of the substrate 102. The pressure pad 208 also ensures that the adhesive 1 14 is substantially thin, uniform, and has no air gaps. After the substrate 102, the adhesive 1 14, and the flexible layer 108 are pressed together, the curing light source 206 is actuated, and the light emitted from the curing light source 206 causes curing of the adhesive 114. After the adhesive 114 is substantially cured, the upper die set 202 is moved away from the lower die set 204, and the finished assembly 100 is removed from the nest 210.

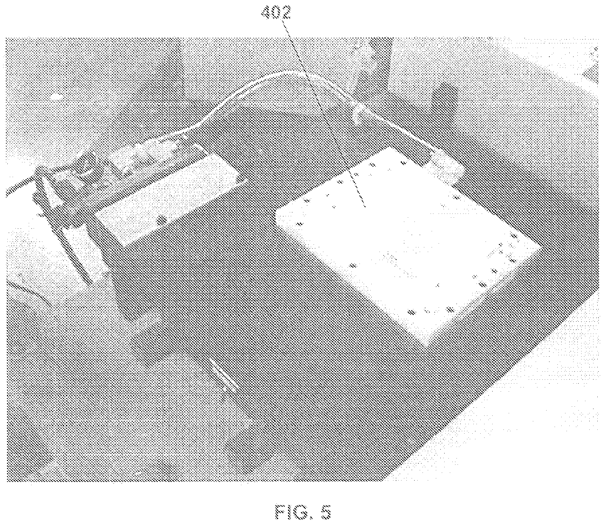

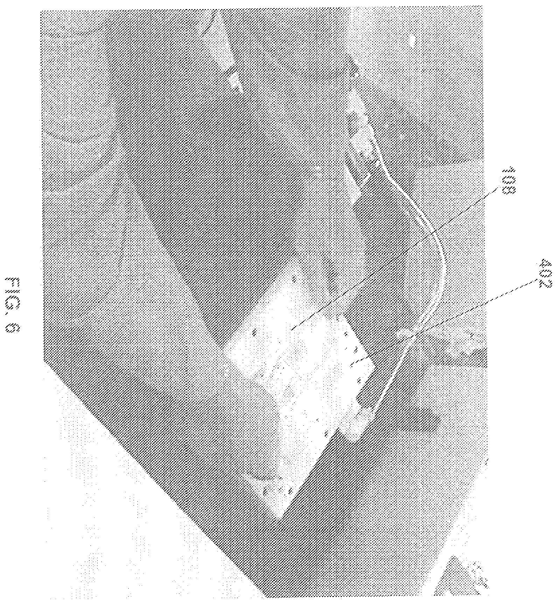

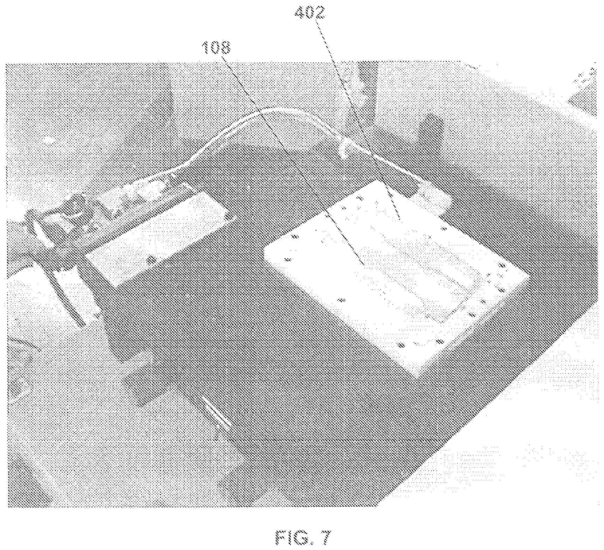

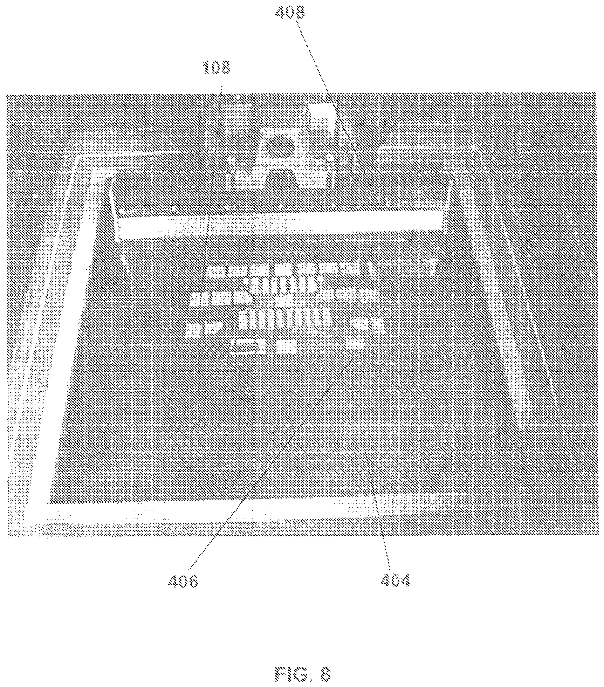

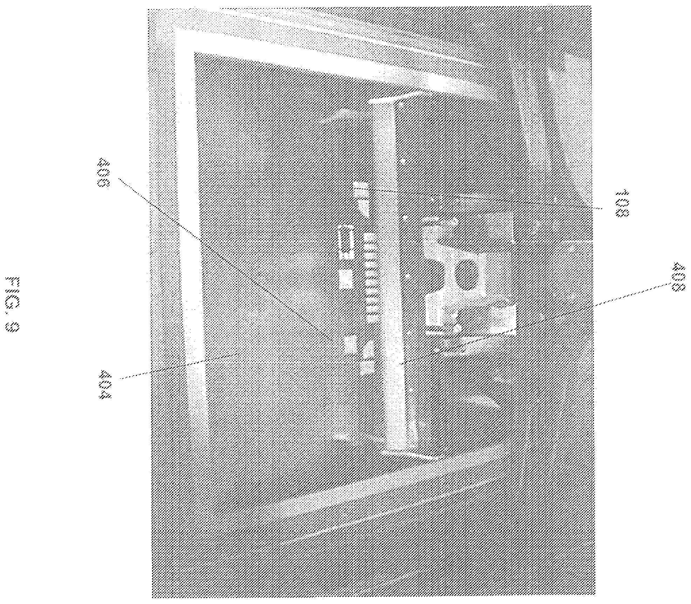

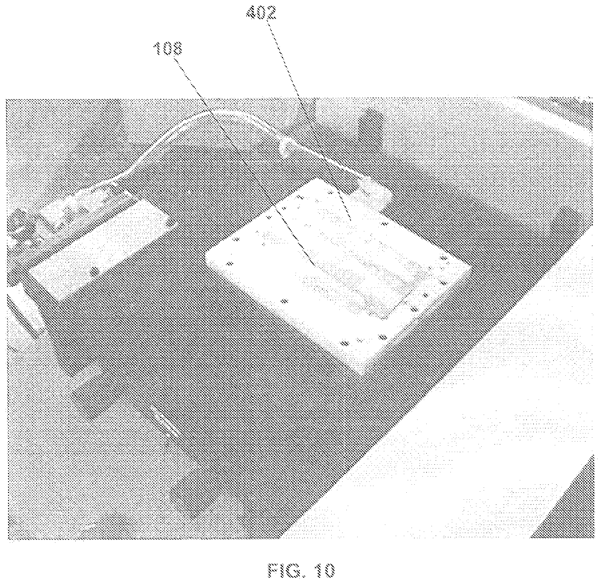

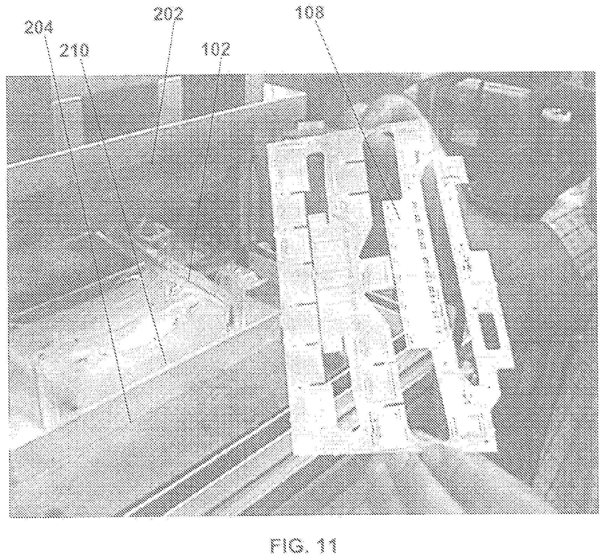

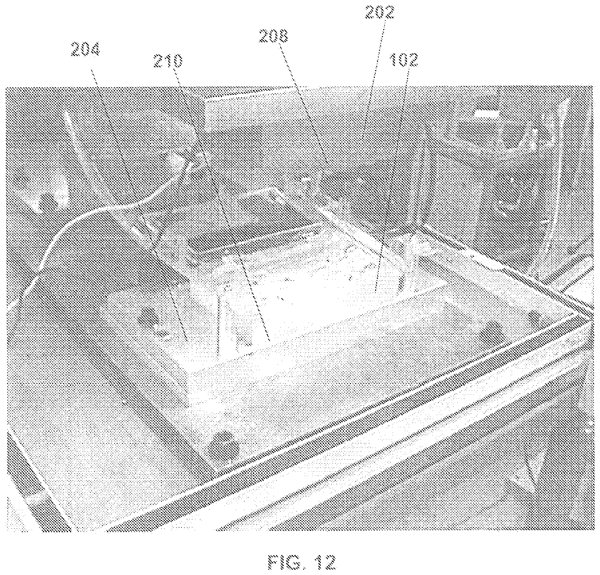

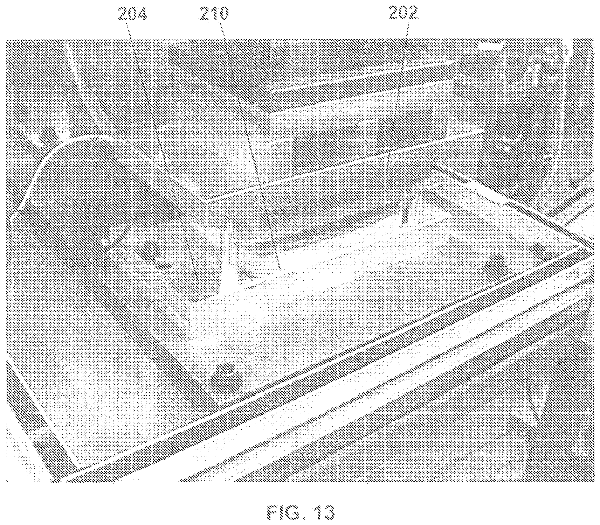

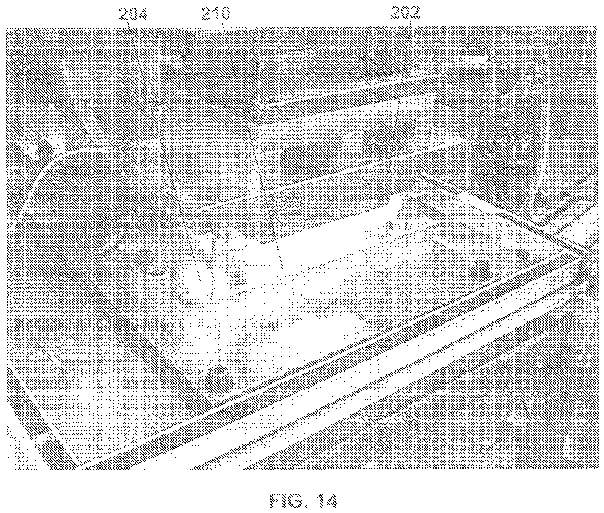

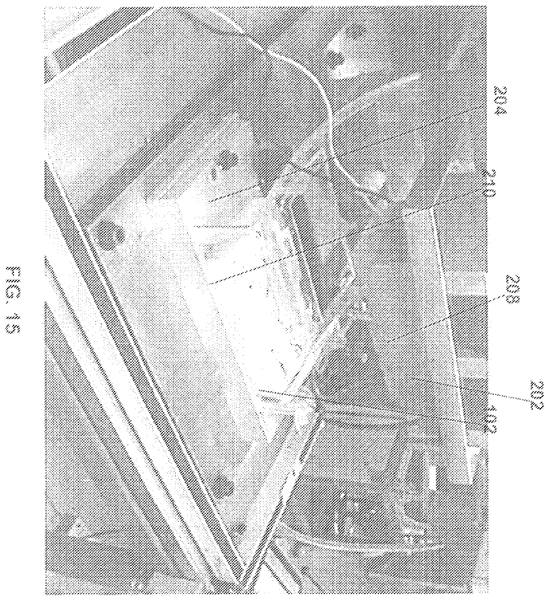

Referring to FIG 5, steps in a method 300 of manufacturing the assembly 100 are shown. The steps shown are not meant to be limiting to the invention. Instead, the illustrated steps show one exemplary embodiment of the method 300 of manufacturing the assembly 100. One or more of the steps may be omitted in other embodiments, or the steps may be performed in an order different from the one shown in FIG 5. In step 302, an adhesive stencil fixture is provided. In step 304, a flexible layer 108 is placed on the adhesive stencil fixture . In the exemplary embodiment, the flexible layer 108 includes components to form a circuit.

In step 306, an adhesive stencil is placed over the flexible layer 108 and the adhesive stencil fixture . The adhesive stencil 404 has one or more apertures that expose the underlying flexible layer 108 so that uncured adhesive 114 is applied to only predetermined portions of the flexible layer 108 exposed by the apertures . Also, an applicator is placed over the adhesive stencil. In step 308, the applicator moves over the adhesive stencil and applies uncured adhesive 114 to the adhesive stencil. As the applicator applies the uncured adhesive 114 to the adhesive stencil, the uncured adhesive 114 is applied to only the portions of the flexible layer 108 exposed by the apertures . In step 310, the applicator and the adhesive stencil are removed. Thus, uncured adhesive 114 is disposed on portions of the flexible layer 108, with the flexible layer 108 disposed in the adhesive stencil fixture .

In step 312, the flexible layer 108 with uncured adhesive 114 is removed from the adhesive stencil fixture . In step 314, the substrate 102 is disposed in the nest 210 of the lower die set 204. In step 316, the flexible layer 108 with uncured adhesive 114 is disposed on the substrate 102 such that the uncured adhesive 114 is between portions of the flexible layer 108 and the substrate 102, . In step 320, the upper die set 202 is pressed towards the lower die set 204. In step 320, as the upper die set 202 is pressed towards the lower die set 204, the curing light source 206 is actuated. The light from the curing light source 206 causes curing of the uncured adhesive 1 14. In step 322, the upper die set 202 is moved away from the lower die set 204 when the uncured adhesive 114 is substantially cured.

While particular embodiments have been chosen to illustrate the invention, it will be understood by those skilled in the art that various changes and modifications can be made therein without departing from the scope of the invention as defined in the appended claims.

## Claims

1. An assembly (100), the assembly comprising:
a circuit board having an illumination device for outputting light **characterized by** a color and an intensity;
a substrate (102) with a first surface (104) and a second surface (106) opposite the first surface, wherein the substrate allows some portion of the light to pass through the substrate;
a flexible layer (108) with a first surface (110) and a second surface (112) opposite the first surface, wherein the flexible layer substantially conforms to the shape of the substrate, and wherein the flexible layer allows a portion of the light to pass through the first surface and the second surface of the flexible layer, wherein the flexible layer has a thickness such that the light passes through the flexible layer without change to colour or intensity of the light;
an electrical pathway for sending and receiving an electrical signal between the circuit board and the flexible layer;
an adhesive (114) between and mating the second surface of the substrate and the first surface of the flexible layer, wherein the adhesive has at least a viscosity that allows the adhesive to fill in a texture of at least one of the second surface of the substrate and the first surface of the flexible layer to prevent air gaps, and wherein the adhesive allows a portion of the light to pass through the adhesive without changing the colour or the intensity of the light; and
one or more capacitive or field effect devices disposed on the flexible layer (108) configured to be actuated when a user interacts by touching on the first surface (104) of the substrate (102).

2. The assembly according to claim 1, wherein the flexible layer is transparent.

3. The assembly according to claim 1, wherein the flexible layer is translucent.

4. The assembly according to claim 1, wherein the flexible layer is white.

5. The assembly according to claim 1, wherein the flexible layer has a thickness of approximately 0.08 mm.

6. The assembly according to claim 1, wherein the flexible layer comprises a material formed of resin-reinforced glass fibers with no ultraviolet inhibitors or doping.

7. The assembly according to claim 1, wherein the adhesive is one of an ultraviolet light curable adhesive, a natural light curable adhesive, and a heat curable adhesive.

8. A method of manufacturing an assembly, comprising the steps of:
providing a substrate with a first surface and a second surface opposite the first surface, wherein the substrate allows a portion of light to pass through the substrate;
providing a flexible layer with a first surface and a second surface opposite the first surface, wherein the flexible layer allows a portion of the light to pass through the first surface and the second surface of the flexible layer, wherein the flexible layer has a thickness such that the light passes through the flexible layer without change to colour or intensity of the light, and wherein the flexible layer substantially conforms to the shape of the substrate;
disposing an adhesive on at least one of the second surface of the substrate and the first surface of the flexible layer without air gaps, wherein the adhesive allows a portion of the light to pass through the adhesive;
filling in a texture of at least one of the second surface of the substrate and the first surface of the flexible layer with the adhesive;
pressing together the substrate, the adhesive, and the flexible layer;
providing one or more capacitive or field effect devices disposed on the flexible layer (108) configured to be actuated when a user interacts by touching on the first surface (104) of the substrate (102); and
connecting a circuit board having an illumination device to the flexible layer with an electrical pathway for sending and receiving an electrical signal between the circuit board and the flexible layer.

9. The method of manufacturing the assembly according to claim 8, wherein the adhesive is at least one of an ultraviolet light curable adhesive, a natural light curable adhesive, and a heat curable adhesive.

10. The method of manufacturing the assembly according to claim 9, further comprising the step of curing the adhesive with ultraviolet light.

11. The method of manufacturing the assembly according to claim 10, wherein the step of curing the adhesive with ultraviolet light further comprises emitting ultraviolet light through the substrate to cause curing of the adhesive.

12. The method of manufacturing the assembly according to claim 11, wherein the step of providing the flexible layer further comprises providing the flexible layer with a white colour.

13. The method of manufacturing the assembly according to claim 11, wherein the step of providing the flexible layer further comprises forming the flexible layer from a material formed of resin-reinforced glass fibers with no ultraviolet inhibitors or doping.

## Patentansprüche

1. Anordnung (100), wobei die Anordnung Folgendes umfasst:
eine Leiterplatte, die eine Beleuchtungsvorrichtung zum Ausgeben von durch eine Farbe und eine Intensität gekennzeichnetes Licht aufweist;
ein Substrat (102) mit einer ersten Oberfläche (104) und einer der ersten Oberfläche entgegengesetzten zweiten Oberfläche (106), wobei das Substrat es ermöglicht, dass ein Teil des Lichts das Substrat passiert;
eine flexible Schicht (108) mit einer ersten Oberfläche (110) und einer der ersten Oberfläche entgegengesetzten zweiten Oberfläche (112), wobei die flexible Schicht im Wesentlichen der Form des Substrats entspricht, und wobei die flexible Schicht es ermöglicht, dass ein Teil des Lichts die erste Oberfläche und die zweite Oberfläche der flexiblen Schicht passiert, wobei die flexible Schicht eine Dicke aufweist, so dass das Licht die flexible Schicht passiert, ohne Änderung in Farbe oder Intensität des Lichts;
einen elektrischen Übertragungsweg zum Senden und Empfangen eines elektrischen Signals zwischen der Leiterplatte und der flexiblen Schicht;
einen Klebstoff (114) zwischen und zusammenpassend mit der zweiten Oberfläche des Substrats und der ersten Oberfläche der flexiblen Schicht, wobei der Klebstoff zumindest eine Viskosität aufweist, die es ermöglicht, dass der Klebstoff eine Textur von mindestens einer der zweiten Oberfläche des Substrats und der ersten Oberfläche der flexiblen Schicht auffüllt, um Luftspalte zu verhindern, und wobei der Klebstoff es ermöglicht, dass ein Teil des Lichts den Klebstoff passiert, ohne Änderung der Farbe oder der Intensität des Lichts; und
ein oder mehrere, auf der flexiblen Schicht (108) angeordnete kapazitive oder Feldeffekt-Bauelemente, die dazu konfiguriert sind, angesteuert zu werden, wenn ein Benutzer durch Berühren der ersten Oberfläche (104) des Substrats (102) interagiert.

2. Anordnung nach Anspruch 1, wobei die flexible Schicht durchsichtig ist.

3. Anordnung nach Anspruch 1, wobei die flexible Schicht lichtdurchlässig ist.

4. Anordnung nach Anspruch 1, wobei die flexible Schicht weiß ist.

5. Anordnung nach Anspruch 1, wobei die flexible Schicht eine Dicke von etwa 0,08 mm aufweist.

6. Anordnung nach Anspruch 1, wobei die flexible Schicht ein aus harzverstärkten Glasfasern ohne Ultraviolettinhibitoren oder Dotierung gebildetes Material umfasst.

7. Anordnung nach Anspruch 1, wobei der Klebstoff einer von einem mit Ultraviolettlicht aushärtbaren Klebstoff, einem mit natürlichem Licht aushärtbaren Klebstoff und einem mit Wärme aushärtbaren Klebstoff ist.

8. Verfahren zum Herstellen einer Anordnung, umfassend folgende Schritte:
Bereitstellen eines Substrats mit einer ersten Oberfläche und einer der ersten Oberfläche entgegengesetzten zweiten Oberfläche, wobei das Substrat es ermöglicht, dass ein Teil des Lichts das Substrat passiert;
Bereitstellen einer flexiblen Schicht mit einer ersten Oberfläche und einer der ersten Oberfläche entgegengesetzten zweiten Oberfläche, wobei die flexible Schicht es ermöglicht, dass ein Teil des Lichts die erste Oberfläche und die zweite Oberfläche der flexiblen Schicht passiert, wobei die flexible Schicht eine Dicke aufweist, so dass das Licht die flexible Schicht passiert, ohne Änderung in Farbe oder Intensität des Lichts, und wobei die flexible Schicht im Wesentlichen der Form des Substrats entspricht;
Anordnen eines Klebstoff auf mindestens einer der zweiten Oberfläche des Substrats und der ersten Oberfläche der flexiblen Schicht ohne Luftspalte, und wobei der Klebstoff es ermöglicht,
dass ein Teil des Lichts den Klebstoff passiert;
Auffüllen einer Textur von mindestens einer der zweiten Oberfläche des Substrats und der ersten Oberfläche der flexiblen Schicht mit dem Klebstoff;
Zusammenpressen des Substrats, des Klebstoffs und der flexiblen Schicht;
Bereitstellen von einem oder mehreren, auf der flexiblen Schicht (108) angeordneten kapazitiven oder Feldeffekt-Bauelementen, die dazu konfiguriert sind, angesteuert zu werden, wenn ein Benutzer durch Berühren der ersten Oberfläche (104) des Substrats (102) interagiert; und
Anschließen einer Leiterplatte, die eine Beleuchtungsvorrichtung aufweist, an die flexible Schicht mit einem elektrischen Übertragungsweg zum Senden und Empfangen eines elektrischen Signals zwischen der Leiterplatte und der flexiblen Schicht.

9. Verfahren zum Herstellen der Anordnung nach Anspruch 8, wobei der Klebstoff mindestens einer von einem mit Ultraviolettlicht aushärtbaren Klebstoff, einem mit natürlichem Licht aushärtbaren Klebstoff und einem mit Wärme aushärtbaren Klebstoff ist.

10. Verfahren zum Herstellen der Anordnung nach Anspruch 9, ferner umfassend den Schritt des Aushärtens des Klebstoffs mit Ultraviolettlicht.

11. Verfahren zum Herstellen der Anordnung nach Anspruch 10, wobei der Schritt des Aushärtens des Klebstoffs mit Ultraviolettlicht ferner das Emittieren von Ultraviolettlicht durch das Substrat umfasst, um das Aushärten des Klebstoffs herbeizuführen.

12. Verfahren zum Herstellen der Anordnung nach Anspruch 11, wobei der Schritt des Bereitstellens der flexiblen Schicht ferner das Versehen der flexiblen Schicht mit einer weißen Farbe umfasst.

13. Verfahren zum Herstellen der Anordnung nach Anspruch 11, wobei der Schritt des Bereitstellens der flexiblen Schicht ferner das Bilden der flexiblen Schicht aus einem aus harzverstärkten Glasfasern ohne Ultraviolettinhibitoren oder Dotierung gebildeten Material umfasst.

## Revendications

1. Ensemble (100), ledit ensemble comprenant :
une carte de circuit imprimé possédant un dispositif d'éclairage destiné à délivrer en sortie de la lumière **caractérisée par** une couleur et une intensité ;
un substrat (102) avec une première surface (104) et une seconde surface (106) opposée à la première surface, ledit substrat laissant passer une partie de la lumière à travers le substrat ;
une couche souple (108) avec une première surface (110) et une seconde surface (112) opposée à la première surface, ladite couche souple épousant sensiblement la forme du substrat et ladite couche souple laissant passer une partie de la lumière à travers la première surface et la seconde surface de la couche souple, ladite couche souple possédant une épaisseur de sorte que la lumière passe à travers la couche souple sans modification de couleur ou d'intensité de celle-ci ;
un trajet électrique destiné à envoyer et à recevoir un signal électrique entre la carte de circuit imprimé et la couche souple :
un adhésif (114) entre la seconde surface du substrat et la première surface de la couche souple, et
couplant celles-ci ensemble, ledit adhésif possédant au moins une viscosité qui permet à l'adhésif de remplir une texture d'au moins l'une de la seconde surface du substrat et de la première surface de la couche souple pour empêcher la présence de poches d'air et ledit adhésif laissant passer une partie de la lumière à traverser l'adhésif sans modification de couleur ou d'intensité de celle-ci ; et
un ou plusieurs dispositifs à effet capacitif ou à effet de champ disposés sur la couche souple (108) conçus pour être actionnés lorsqu'un utilisateur interagit en touchant la première surface (104) du substrat (102).

2. Ensemble selon la revendication 1, ladite couche souple étant transparente.

3. Ensemble selon la revendication 1, ladite couche souple étant translucide.

4. Ensemble selon la revendication 1, ladite couche souple étant blanche.

5. Ensemble selon la revendication 1, ladite couche souple possédant une épaisseur d'environ 0,08 mm.

6. Ensemble selon la revendication 1, ladite couche souple comprenant un matériau constitué de fibres de verre renforcées par une résine sans inhibiteurs d'ultraviolets ou dopage.

7. Ensemble selon la revendication 1, ledit adhésif étant l'un d'un adhésif durcissable à la lumière ultraviolette, d'un adhésif durcissable à la lumière naturelle et d'un adhésif thermodurcissable.

8. Procédé de fabrication d'un ensemble, comprenant les étapes de :
fourniture d'un substrat doté d'une première surface et une seconde surface opposée à la première surface, ledit substrat laissant passer une partie de la lumière à travers le substrat ;
fourniture d'une couche souple dotée d'une première surface et d'une seconde surface opposée à la première surface, ladite couche souple laissant passer une partie de la lumière à travers la première surface et la seconde surface de la couche souple, ladite couche souple possédant une épaisseur de sorte que la lumière traverse la couche souple sans modification de couleur ou
d'intensité de celle-ci, et ladite couche souple épousant sensiblement la forme du substrat ;
mise en place d'un adhésif sur au moins l'une de la seconde surface du substrat et de la première surface de la couche souple sans présence de poches d'air, ledit adhésif laissant passer une partie de la lumière à travers l'adhésif ;
remplissage d'une texture d'au moins l'une de la seconde surface du substrat et de la première surface de la couche souple avec l'adhésif ;
pressage ensemble du substrat, de l'adhésif et de la couche souple ; fourniture d'un ou de plusieurs dispositifs à effet capacitif ou à effet de champ disposés sur la couche souple (108) conçus pour être actionnés lorsqu'un utilisateur interagit en touchant la première surface (104) du substrat (102) ; et
le raccordement d'une carte de circuit imprimé possédant un dispositif d'éclairage à la couche souple avec un trajet électrique permettant d'envoyer et de recevoir un signal électrique entre la carte de circuit imprimé et la couche souple.

9. Procédé de fabrication de l'ensemble selon la revendication 8, ledit adhésif étant au moins l'un d'un adhésif durcissable à la lumière ultraviolette, d'un adhésif durcissable à la lumière naturelle et d'un adhésif thermodurcissable.

10. Procédé de fabrication de l'ensemble selon la revendication 9, comprenant en outre l'étape de durcissement de l'adhésif à l'aide d'une lumière ultraviolette.

11. Procédé de fabrication de l'ensemble selon la revendication 10, ladite étape de durcissement de l'adhésif à l'aide d'une lumière ultraviolette comprenant en outre l'émission de lumière ultraviolette à travers le substrat pour entraîner un durcissement de l'adhésif.

12. Procédé de fabrication de l'ensemble selon la revendication 11, ladite étape de fourniture de la couche souple comprenant en outre l'obtention de la couche souple dotée d'une couleur blanche.

13. Procédé de fabrication de l'ensemble selon la revendication 11, ladite étape de fourniture de la couche souple comprenant en outre la formation de la couche souple à partir d'un matériau constitué de fibres de verre renforcées par une résine, sans inhibiteurs d'ultraviolets ou dopage.
